# EUROPEAN PATENT APPLICATION

(11) **EP 2 587 350 A2**
(43) Date of publication of application: **01.05.2013**
(21) Application number: 12189635.1
(22) Date of filing: 23.10.2012
(51) Int. Cl.: G06F 3/041, G06F 3/0488, B64C 13/00

(54) **Method for determining valid touch screen inputs**

(30) Priority: 24.10.2011 US 201113279417
(71) Applicant: General Electric Company, Schenectady, NY 12345 (US)
(72) Inventor: Kolbe, Dashiell Matthews, Grand Rapids, MI 49503 (US)
(74) Representative: Williams, Andrew Richard

(57) **Abstract**

A method of operating an aircraft (10), which has a cockpit (12) with a flight deck (18) having at least one touch screen display (24) includes sensing an object touching on the at least one touch screen display (24) to define an input touch and determining whether the input touch on the at least one touch screen display (24) is invalid.

## Description

### BACKGROUND OF THE INVENTION

Contemporary aircraft cockpits include a flight deck having multiple flight displays, which may display to the flight crew a wide range of aircraft, flight, navigation, and other information used in the operation and control of the aircraft. The multiple flight displays may include touch screens to control various features of the aircraft. During periods of heavy turbulence, vibrations are created in the aircraft as a whole making it difficult to touch the touch screen in the desired manner or location.

Current touch screen displays may utilize a physical stabilization device such as a palm or wrist rest or may have a smaller touch surface and may utilize an edge of the touch screen display as a resting device. Both options limit the size of the touch screen, which is undesirable in the limited space of an aircraft cockpit. Alternative touch screen displays having larger touch areas are unable to be effectively utilized during periods of heavy turbulence because a user will stabilize their hand on the touch surface of the display. Such stabilization becomes an additional touch on the screen, which may result in an input that the user did not intend.

### BRIEF DESCRIPTION OF THE INVENTION

In one embodiment, a method of operating an aircraft having a cockpit with a flight deck having at least one touch screen display includes detecting movement indicative of turbulence, sensing an object touching on the at least one touch screen display to define an input touch, determining at least one characteristic of the input touch, comparing the at least one characteristic of the input touch to a reference characteristic, and determining whether the input touch is invalid based on the detected turbulence and the comparison

In another embodiment, a method of operating an aircraft having a cockpit with a flight deck having at least one touch screen display includes sensing an object touching on the at least one touch screen display to define an input touch, determining a human bio-mechanical signature the input touch, comparing the at least one characteristic of the input touch to a reference characteristic, and determining whether the input touch is invalid based on the comparison.

### BRIEF DESCRIPTION OF THE DRAWINGS

In the drawings:
Figure 1 is a perspective view of a portion of an aircraft cockpit with a flight deck having multiple touch screen displays that may be used according to the invention.
Figure 2 is a schematic view of a user providing multiple input touches on a touch screen display, which may be used in the flight deck of Figure 1.
Figure 3 is schematic view of the multiple touch inputs provided by the user in Figure 2.

### DESCRIPTION OF EMBODIMENTS OF THE INVENTION

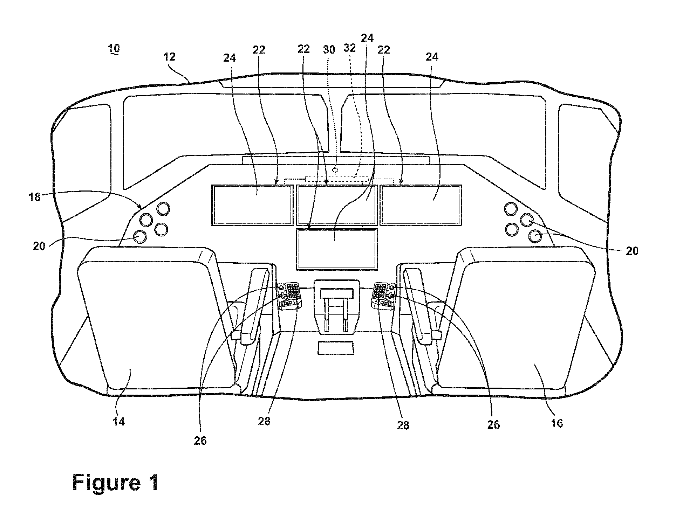

Figure 1 illustrates a portion of an aircraft 10 having a cockpit 12. While a commercial aircraft has been illustrated, it is contemplated that the invention may be used in any type of aircraft, for example, without limitation, fixed-wing, rotating-wing, rocket, personal aircraft, and military aircraft. A first user (e.g., a pilot) may be present in a seat 14 at the left side of the cockpit 12 and another user (e.g., a co-pilot) may be present at the right side of the cockpit 12 in a seat 16. A flight deck 18 having various instruments 20 and multiple multifunction flight displays 22 may be located in front of the pilot and co-pilot and may provide the flight crew with information to aid in flying the aircraft 10. The flight displays 22 may include either primary flight displays or multi-function displays and may display a wide range of aircraft, flight, navigation, and other information used in the operation and control of the aircraft 10.

The flight displays 22 have been illustrated as being in a spaced, side-by-side arrangement with each other. The flight displays 22 may be laid out in any manner including having fewer or more displays. Further, the flight displays 22 need not be coplanar and need not be the same size. A touch screen display or touch screen surface 24 may be included in the flight display 22 and may be used by one or more flight crew members, including the pilot and co-pilot, to interact with the systems of the aircraft 10. Such touch screen surface 24 may take any suitable form including that of a liquid crystal display (LCD) and may use various physical or electrical attributes to sense inputs from the flight crew. While all of the flight displays 22 have been illustrated as including touch screen surfaces 24, it is contemplated that only some of the flight displays 22 may include such touch screen surfaces 24.

It is contemplated that one or more cursor control devices 26 and one or more multifunction keyboards 28 may be included in the cockpit 12 and may also be used by one or more flight crew members to interact with the systems of the aircraft 10. A suitable cursor control device 26 may include any device suitable to accept input from a user and to convert that input to a graphical position on any of the multiple flight displays 22. Various joysticks, multi-way rocker switches, mice, trackballs, and the like are suitable for this purpose and each user may have separate cursor control device(s) 26 and keyboard(s) 28.

A turbulence detector 30 may be included within the aircraft 10. The turbulence detector 30 may be placed in any suitable location such as the cabin or storage area of the aircraft and has by way of non-limiting example been illustrated within the cockpit 12. The turbulence detector 30 may be any suitable mechanism for detecting turbulence including by way of non-limiting examples, a vertical accelerometer, a longitudinal accelerometer, a toroidal accelerometer, a vibration indicator, or any combination of the previous examples or equivalents thereof. The turbulence detector 30 may output a signal indicative of turbulence or may output a signal that may be used to determine if turbulence is present.

A controller 32 may be operably coupled to components of the aircraft 10 including the flight displays 22, touch screen surface 24, cursor control devices 26, keyboards 28, and turbulence detector 30. The controller 32 may also be connected with other controllers (not shown) of the aircraft 10. The controller 32 may include memory and processing units, which may be running any suitable programs to implement a graphical user interface (GUI) and operating system. These programs typically include a device driver that allows the user to perform functions on the touch screen surface 24 such as selecting and opening files, moving icons, selecting options, and inputting commands and other data through the touch screen surface 24. The turbulence detector 30 may provide turbulence information to the controller 32 including that turbulence has been detected. Alternatively, the controller 32 may process the data output from the turbulence detector 30 and determine from the output that the aircraft 10 is experiencing turbulence. The controller 32 may also receive inputs from one or more other additional sensors (not shown), which may provide the controller 32 with various information to aid in the operation of the aircraft 10.

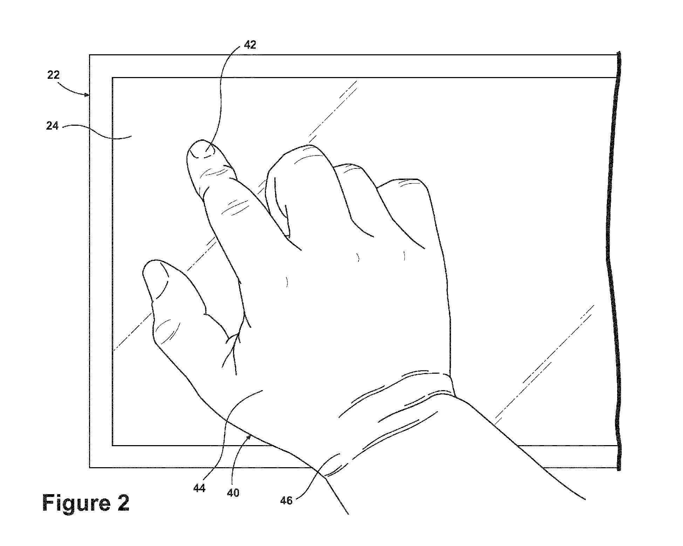

Referring now to Figure 2, an embodiment of a user 40 touching the touch screen surface 24 is illustrated. The user 40 may use a fingertip 42 to write, tap, or provide other types of input on the touch screen surface 24. It is expected that occasionally a user 40 will inadvertently touch the touch screen surface 24 with the other portions of the user's palm or hand 44 or wrist 46 while providing input to the touch screen surface 24. For example, the user 40 may rest a portion of their hand 44 on the touch screen surface 24 while writing on the touch screen surface 24. This is increasingly likely during turbulent conditions of the aircraft 10 as a user 40 will need to steady their hand 44 or wrist 46 in order to make an accurate input touch with their fingertip 42.

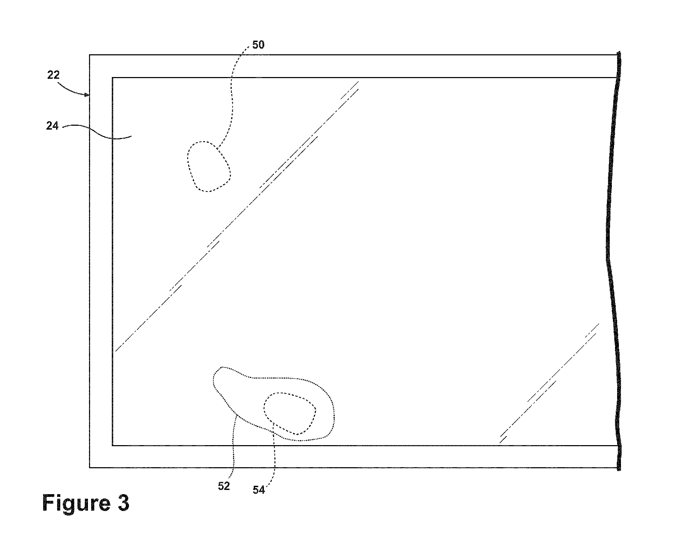

Figure 3 illustrates that when the user 40 touches the touch screen surface 24 in the above described manner various input touches may be recognized. By way of non-limiting example, an input touch 50 may occur when the fingertip 42 touches the touch screen surface 24 and an input touch 52 may occur as a portion of the user's hand 44 rests on the screen and the user 40 selects an option with their finger 42. The input touch 50 and the input touch 52 may or may not be simultaneous. Alternatively, a smaller portion of the user's hand 44 may rest upon the touch screen surface 24 to create an alternative input touch 54.

It is contemplated that the aircraft 10 may be operated such that input touches that are made by other than the user's fingertip 42 may be determined by the controller 32 as invalid and may be ignored as inputs by the controller 32. In this manner, the controller 32 may make determinations about the touch inputs on the touch screen surface 24 and take specific actions with respect to such touch inputs. The determination of invalid touches may be made in a multitude of ways but it is contemplated that such determinations may be based on one or more characteristics of the input touch itself either alone or in combination with turbulence being detected.

The below described embodiments of the inventive methods operate an aircraft 10 in a variety of ways to determine the invalidity of such input touches that are made by other than the user's fingertip 42. A first embodiment may determine such an inadvertent or stabilization touch made by the palm 44 or wrist 46 of the user 40 through detection of a bio-mechanical signature of the input touches. Such a method may include sensing an object touching on the touch screen surface 24 to define an input touch. The controller 32 may continuously receive output signals from the touch screen display 22 or may receive output signals from the touch screen display 22 only when an input touch is sensed. Regardless of the output mechanism, the controller 32 may determine a human bio-mechanical signature from the sensed input touch or sensed input touches. Such a human bio-mechanical signature may include, by way of non-limiting example, a pulse strength of the sensed input touch. Any suitable mechanism may detect the pulse strength of the sensed input touch. By way of non-limiting example the flight display 22 may include a sensor, such as a finger pulse oximeter, for detecting the pulse strength on the touch screen surface 24. The controller 32 may then compare the determined human bio-mechanical signature to a reference characteristic to determine whether the input touch is invalid based on the comparison.

In the case where the human bio-mechanical signature determined from the input touch is a pulse strength, the input touch may be determined invalid when the comparison indicates that the pulse strength is not indicative of the pulse in a human fingertip 42. For example, the input touch may be determined invalid when the pulse strength is indicative of a pulse strength of a human palm. Fingertips 42 have a stronger pulse than the pulse in the palm 44 or wrist 46; thus, the reference characteristic could be any predetermined range or value that is indicative of a non-fingertip pulse strength. For purposes of this description it may be understood that reference values may be easily selected or numerically modified such that any typical comparison may be substituted (greater than, less than, equal to, not equal to, etc.).

A second embodiment may include determining whether the input touch is invalid based on detected turbulence and a comparison between a determined characteristic of the input touch and a reference characteristic. Such a method may be used in operating the aircraft 10 described above and may include detecting movement indicative of turbulence. More specifically, the turbulence detector 30 may provide turbulence information or an output indicative of turbulence to the controller 32. Alternatively, the turbulence detector 30 may provide an output signal to the controller 32 and the controller 32 may determine from the output signal if turbulence is present. By way of non-limiting example, if the turbulence detector 30 is an accelerometer it may provide an output signal indicative of the acceleration of the aircraft 10 and if the acceleration is greater than a predetermined threshold the controller 32 may determine that the aircraft 10 is experiencing turbulence. The controller 32 may directly compare the output of the turbulence detector 30 to such a predetermined threshold or intermediate functions such as filtering and averaging may be implemented before the comparison is made with the predetermined threshold. For purposes of this description it may be understood that predetermined threshold may be easily selected or numerically modified such that any typical comparison may be substituted (greater than, less than, equal to, not equal to, etc.).

As with the above described method an object touching on the touch screen surface 24 may be sensed to define an input touch. The controller 32 may determine at least one characteristic of the input touch and that at least one characteristic may be compared to a reference characteristic. Any number of characteristics may be determined from the input touch including by way of non-limiting examples dwell time and touch area.

In the case where the determined characteristic of the input touch is the dwell time of the input touch, the reference characteristic may be a dwell time indicative of an inadvertent touch. Such an inadvertent touch may include a dwell time indicative of a portion of a palm 44 or a portion of a wrist 46 resting on the touch screen surface 24 during turbulent conditions. The comparison may indicate that any dwell time above a certain amount is indicative of an invalid input touch. Such predetermined reference dwell times related to inadvertent touches may be experimentally or otherwise determined.

Alternatively, the at least one characteristic of the input touch may be indicative of a human physiological attribute. Such a physiological attribute may include a fingertip size or a pulse strength as described above. Thus, the characteristic of the input touch that is determined may be an area of the input touch. In that case, the comparison may be made between the determined area of the input touch and a standard area of a human fingertip. The standard area may be predetermined in any way but it is contemplated that the standard area may be selected based on a subset of human fingertips. Such subsets may be based on geographic origin and average fingertip sizes corresponding thereto, see for example the disclosure in the Handbook of Normal Physical Measurements. (Hall, Judith G., Ursula G. Froster-Iskenius, Judith E. Allanson. Handbook of Normal Physical Measurements, Volume 177. Oxford University Press, 1989.). Thus, a user from a specific geographic origin may input such information into the controller 32 and the appropriate subset may be used in the comparison. Alternatively, the subset may be based on a pilot profile, which may include standard areas for that specific user. It is contemplated that the controller 32 may include a database of each user's unique measurements or may include a default reference characteristic representing a generic or geographic specific set of fingertip measurements. By way of non-limiting example, the input touch may be determined invalid when the comparison indicates that the determined area of the input touch is greater than 1.5 times the reference standard area.

Regardless of the type of characteristic determined and the type of comparison made, the controller 32 may then determine the validity of the input touch based on the detected turbulence and the comparison. By way of non-limiting example, if it is determined that turbulence is detected and the comparison does not satisfy some predetermined threshold then it may be determined invalid. The term "satisfies" the predetermined threshold is used herein to mean that the difference satisfies the predetermined threshold, such as being equal to or less than some threshold value. It will be understood that such a determination may easily be altered to be satisfied by a positive/negative comparison or a true/false comparison. The threshold may be experimentally determined and it is contemplated that the comparison may change depending upon the amount of turbulence detected. For purposes of this description, it may be understood that comparison and reference characteristics may be easily selected or numerically modified such that any typical comparison may be substituted (greater than, less than, equal to, not equal to, etc.).

It is also contemplated that in an embodiment of the invention that the location of the input touches on the touch screen surface 24 may be determined. In that case the determination of the invalid touch may be based on the determined comparison and/or the determined turbulence and the location of the input touch. For example, if turbulence is detected and the location of the input touch is in an area normally associated with stabilization then the input touch may be determined invalid. Another example is when the touch occurs at a location where no input is expected, such as a portion of the display where no input icon is being displayed.

It is also contemplated that a touch screen surface 24 may be set for a right handed or a left handed user. When multiple input touches are detected on the touch screen surface 24 the controller 32 may determine that only the left most or right most input touches are valid. For example, on a right handed setting, a user may place all of their finger tips on the screen for stabilization during turbulence and only the left most or index finger would be determined valid and registered as an active control. As the right-handed user moves their hand to the right edge and fingers are removed from the screen, the left most fingertip will remain active. Further, the controller 32 may be programmed to ignore input from specific areas of the touch screen surface 24 where there are no meaningful user-selectable options offered.

It has also been contemplated that when turbulence is detected, the aircraft 10 may be operated to reduce the options available on the touch screen display 22 or that such options may be associated with larger graphics and areas on the flight display 22. This may be done automatically when turbulence is detected. Alternatively, an actuator, such as a button near the flight display 22, or the cursor control device 26, or the keyboard 28 may be used to initiate such a screen decluttering mode to increase the precision at which selections could be made via the touch screen surface 24.

The above described embodiments allow for the determination of inadvertent touches by the user and allow use of the full area of the flight display for the touch screen surface. This may be especially important during periods of turbulence where a user is more likely to rest portions of their hand on the touch screen or inadvertently touch portions of the touch screen. The above described methods determine touch invalidity on a touch sensitive screen and mitigate the effects of turbulent environmental motions on inputs into the system and eliminate the need of a physical stabilization device.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of operating an aircraft (10) having a cockpit (12) with a flight deck (18) having at least one touch screen display (24) the method comprising:
detecting movement indicative of turbulence (30);
sensing an object (40, 42, 44, 46) touching on the at least one touch screen display (24) to define an input touch (50, 52);
determining at least one characteristic of the input touch (50, 52);
comparing (32) the at least one characteristic of the input touch (50, 52) to a reference characteristic; and
determining whether the input touch (50, 52) is invalid based on the detected turbulence and the comparison.

2. The method of claim 1, wherein the at least one characteristic of the input touch (50, 52) is an area of the input touch.

3. The method of either of claim 1 or 2, wherein the reference characteristic is a standard area of a human fingertip (42).

4. The method of claim 3, wherein the input touch (50, 52) is determined invalid when the comparison indicates that the area of the input touch is greater than 1.5 times the standard area of a human fingertip (42).

5. The method of either of claim 3 or 4, wherein the standard area is selected based on a subset of human fingertips (42).

6. The method of claim 5, wherein the subset is based on geographic origin.

7. The method of claim 5, wherein the subset is based on at least one pilot profile.

8. The method of claim 1, wherein the at least one characteristic of the input touch (50, 52) is a dwell time.

9. The method of claim 8, wherein the reference characteristic is a dwell time indicative of at least one of a portion of a palm (44) and a portion of a wrist (46) resting on the touch screen (24).

10. The method of claim 1, wherein the at least one characteristic of the input touch (50, 52) is indicative of a human physiological attribute.

11. The method of claim 10, wherein the human physiological attribute comprises at least one of fingertip (42) size and pulse strength.

12. The method of claim 1, further comprising determining a location of the input touch (50, 52) on the touch screen (24) and determining an invalid touch based on the comparison and the location of the input touch (50, 52).

13. The method of any preceding claim, further comprising reducing options available on the touch screen display (24) when turbulence is detected.

14. A method of operating an aircraft (10) having a cockpit (12) with a flight deck (18) having at least one touch screen display (24), the method comprising:
sensing an object (40, 42, 44, 46) touching on the at least one touch screen display (24) to define an input touch (50, 52);
determining a human bio-mechanical signature of the input touch (50, 52);
comparing the human bio-mechanical signature of the input touch (50, 52) to a reference characteristic; and
determining whether the input touch (50, 52) is invalid based on the comparison.

15. The method of claim 14, wherein the human bio-mechanical signature is a pulse strength, and wherein the input touch (50, 52) is determined invalid when the comparison indicates that the pulse strength is not indicative of the pulse in a human fingertip (42).

16. The method of claim 15, wherein the input touch (50, 52) is determined invalid when the pulse strength is indicative of a pulse strength of a human palm (44).
